(19) Europäisches Patentamt
European Patent Office
Office européen des brevets

(11) **EP 2 099 940 B1**

(12) # EUROPÄISCHE PATENTSCHRIFT

(45) Veröffentlichungstag und Bekanntmachung des Hinweises auf die Patenterteilung:
**14.03.2012 Patentblatt 2012/11**

(21) Anmeldenummer: **07803070.7**

(22) Anmeldetag: **30.08.2007**

(51) Int Cl.:
*F27D 1/00* (2006.01)     *F27D 17/00* (2006.01)
*C21C 5/30* (2006.01)     *C21C 5/46* (2006.01)
*C21C 7/068* (2006.01)

(86) Internationale Anmeldenummer:
**PCT/EP2007/059061**

(87) Internationale Veröffentlichungsnummer:
**WO 2008/049673 (02.05.2008 Gazette 2008/18)**

(54) **VERFAHREN ZUR REGELUNG DES KOHLENMONOXID-AUSTRAGS BEI EINEM METALLURGISCHEN SCHMELZVERFAHREN**

METHOD OF REGULATING THE OUTPUT OF CARBON MONOXIDE IN A METALLURGICAL MELTING PROCESS

PROCÉDÉ DE RÉGULATION DE L'ÉMISSION DE MONOXYDE DE CARBONE DANS UN PROCÉDÉ DE FUSION MÉTALLURGIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.10.2006 DE 102006050888**

(43) Veröffentlichungstag der Anmeldung:
**16.09.2009 Patentblatt 2009/38**

(73) Patentinhaber: **SIEMENS AKTIENGESELLSCHAFT**
**80333 München (DE)**

(72) Erfinder: **MATSCHULLAT, Thomas**
**90542 Eckental (DE)**

(56) Entgegenhaltungen:
**WO-A-02/075003     JP-A- 5 222 429**

• **KOEHLE S ET AL: "BEOBACHTUNG DES ENTKOHLUNGSPROZESSES ANHAND VON ABGASMESSUNGEN" STAHL UND EISEN, VERLAG STAHLEISEN, DUSSELDORF, DE, Bd. 113, Nr. 6, 14. Juni 1993 (1993-06-14), Seiten 55-60, XP000369701 ISSN: 0340-4803**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Regelung des Kohlenmonoxid-Austrags bei einem metallurgischen Schmelzverfahren. Zur Herstellung qualitativ hochwertigen Stahls ist der Kohlenstoffgehalt (C) des Ausgangsrohstoffes zu reduzieren. Der Ausgangsrohstoff kann hierbei teilweise aus Schrott gewonnen werden, welcher in einem Aggregat, etwa einem Konverter oder einem Elektrolichtbogenofen zunächst geschmolzen und dann entkohlt wird. Zur Entkohlung wird in die Schmelze Sauerstoff ($O_2$) eingeblasen, welcher den in der Schmelze enthaltenen Kohlenstoff oxidiert. Das auf diese Weise entstandene Kohlenmonoxid (CO) bildet Gasblasen in der Schmelze, welche zu deren Oberfläche aufsteigen und die Schlacke auf der Schmelzenoberfläche durchdringen. In einem Gasraum oberhalb der Schmelze kann Kohlenmonoxid teilweise zu Kohlendioxid oxidieren oder vollständig durch Nachverbrennungseinrichtungen oxidiert werden. Ein CO, $CO_2$ sowie auch $H_2$, $H_2O$ und $N_2$ enthaltender Abgas entweicht durch einen Abgasauslass aus dem Aggregat und Primärgas wird in der Regel einer Entstaubungsanlage und einer Filteranlage zugeführt.

Das Entstehungsprofil des CO ist jedoch nicht immer proportional zur eingeblasenen Menge an Sauerstoff, was darauf zurückzuführen ist, dass die flüssige Schmelze in der Lage ist, je nach Strömungs- und Temperatursituation, das entstandene CO metastabil zu lösen bzw. zurückzuhalten. Mitunter fehlt der nötige Impuls zum Aufsteigen des in der Schmelze angesammelten Gases CO und der kritische Punkt, an dem das Gas aufsteigt, wird erst bei einer entsprechenden Gasblasengröße erreicht oder durch Sekundäreinflüsse (wie z.B. Spülelemente) provoziert. Das Gas entweicht dann nahezu schlagartig. Dieser unerwünschte Effekt, das sogenannte Boiling, kann zu Sicherheitsgefährdung und Sachschäden am Aggregat und angeschlossener Peripherie führen, wie etwa einer Primärgasentstaubung oder einer Filteranlage.

JP5222429 offenbart beispielsweise ein Verfahren zur Verhinderung von Boiling Effekten durch Steuerung der Sauerstoffzufuhr.

Aufgabe der Erfindung ist es daher, ein Verfahren zur Regelung des Kohlenmonoxid-Austrags bei einem metallurgischen Schmelzverfahren anzugeben, mit dem ein schlagartiges Entweichen von Kohlenmonoxid verhindert oder zumindest dessen Intensität verringert werden kann.

Diese Aufgabe wird durch ein Verfahren nach Anspruch 1 gelöst. Bei diesem wird der Istwert des aus der Schmelze entweichenden Kohlenstoffstroms ermittelt und der sich aus der zugeführten Sauerstoffmenge und dem Kohlenstoffgehalt der Schmelze unter Berücksichtigung etwaiger sonstiger Reaktionen ergebende Sollwert des entweichenden Kohlenstoffstroms berechnet, und Ist- und Sollwert miteinander verglichen werden und im Falle eines Zurückbleibens des Istwertes gegenüber dem Sollwert zur Verhinderung von Boiling-Effekten der Schmelze Kohlenstoff zugeführt wird. Der Kohlenstoffstrom gibt hierbei die Menge des pro Zeiteinheit in Form von CO und/oder $CO_2$ abgeführten Kohlenstoffs, etwa in Kilogramm pro Sekunde an. Bleibt der Istwert hinter dem theoretischen Wert zurück, ist dies ein klares Indiz dafür, dass eine Ansammlung kohlenmonoxidhaltiger Gase in der Schmelze stattfindet und ermöglicht das rechtzeitige Einleiten geeigneter Gegenmaßnahmen, um den schlagartigen Aufstieg von Gasblasen, das unerwünschte Boiling, zu reduzieren oder gar zu vermeiden. Dadurch wird auch die Betriebssicherheit des Aggregates erhöht.

Das genannte Verfahren ist beispielsweise in Konvertern , AOD-Konvertern (Argon-Oxygen-Decarburization, AOD) und insbesondere auch in Elektrolichtbogenöfen anwendbar.

Der Istwert des Kohlenstoffstroms kann aus der Analyse der Zusammensetzung der durch den Abgasauslass entweichenden Gase ermittelt werden. Hierbei können der Kohlenmonoxid- und Kohlendioxidgehalt beispielsweise mittels Gaschromatographie oder einer lasergestützten Gasanalyse ermittelt werden.

Der Sollwert des entweichenden Kohlenstoffstroms kann unter anderem aus der Menge des der Schmelze zugeführten Sauerstoffs und dem Kohlenstoffgehalt der Schmelze berechnet werden. Hierbei kann ggf. auch die zur Regulierung der Schaumschlacke einem Elektrolichtbogenofen zugeführte Kohlenstoffmenge berücksichtigt werden.

Für den Betrieb des Aggregats besonders vorteilhaft ist ein möglichst steter Kohlenstoffstrom, der keine schnellen Schwankungen aufweist. Durch die Berechnung des Sollwerts des Kohlenstoffstroms kann über einen Vergleich mit seinem Istwert jederzeit festgestellt werden, ob in der Schmelze eine Ansammlung von Kohlenmonoxid stattfindet. Die Auswertung des Vergleichs zwischen Istwert und Sollwert ermöglicht das rechtzeitige Einleiten von Gegenmaßnahmen. Hierbei kann die Sauerstoffzufuhr zur Schmelze verringert oder eingestellt werden oder aber zusätzlicher Kohlenstoff zugeleitet werden. Durch die Verringerung der Sauerstoffzufuhr wird die Bildung weiteren Kohlenmonoxids zunächst verhindert. Die zusätzliche Eindüsung von Kohlenstoff kann hingegen zur unmittelbaren Bildung von Kohlenmonoxidbläschen führen, wodurch ggf. der Aufstieg weiterer Gasansammlungen aus der Schmelze provoziert wird.

Die Erfindung wird nun unter Bezugnahme auf die beigefügten Zeichnungen näher erläutert. Es zeigen

FIG 1   eine Prinzipskizze eines Aggregats für das metallurgische Schmelzverfahren,

FIG 2   ein Ablaufdiagramm zur Regelung des metallurgischen Schmelzverfahrens, und

FIG 3   Kennlinien des metallurgisches Schmelzverfahrens.

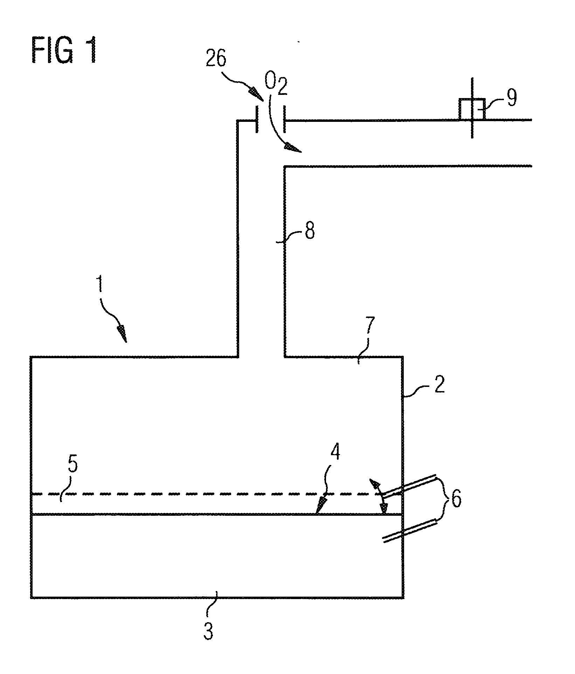

FIG 1 zeigt eine Prinzipskizze eines Aggregats 1 für ein metallurgisches Schmelzverfahren. Das Aggregat 1 kann ein Konverter, AOD-Konverter, ein Elektrolichtbogenofen oder vergleichbares, insbesondere zur Stahlherstellung sein. In einem Gefäß 2 befindet sich das zu einer Schmelze 3 geschmolzene Rohmaterial, welches auf der Oberseite 4 von einer Schlackeschicht 5 bedeckt wird. Über Einblasrohre 6 kann der Schmelze 3 zu einem ersten Zeitpunkt ($t_1$) Sauerstoff oder Kohlenstoff zugeführt werden. Praktischerweise ist zumindest die zugeführte Sauerstoffmenge ($m_0$) bekannt. Im Bereich der Schmelze 3 reagieren Kohlenstoff und Sauerstoff zu Kohlenmonoxid: $C + \frac{1}{2}O_2 \rightarrow CO$. Hierbei kann aus dem geschmolzenen Rohmaterial stammender Kohlenstoff oder aber über die Einblasrohre 6 zugeführter Kohlenstoff oxidiert werden. Das Kohlenmonoxid ist zunächst in der Schmelze 3 gelöst bzw. wird darin in Form feiner Gasblasen zurückgehalten und geht zumindest teilweise in die Gasphase über, wobei Gasblasen zur Oberseite 4 der Schmelze 3 aufsteigen und die Schlackeschicht 5 durchdringen, so dass das Kohlenmonoxid zunächst in den Gasraum 7 oberhalb der Schlackeschicht entweicht. Im Gasraum 7 reagiert ein Teil des Kohlenmonoxids mit Sauerstoff zu Kohlendioxid: $CO + \frac{1}{2}O_2 \rightarrow CO_2$.

Am Gasraum 7 ist ein Abgasauslass 8 angeordnet, durch welchen u.a. die kohlenstoffhaltigen Gase aus dem Gasraum 7 des Aggregats 1 entweichen. Durch einen Schlitz 26 im Abgasauslass wird Sauerstoff ($O_2$) angesaugt, wodurch die Abgase nachverbrannt werden. Sie können einer sogenannten (nicht dargestellten) Primärgas-Entstaubung und anschließend einer Filteranlage zugeführt werden. Im Abgasauslass 8 befindet sich eine Messvorrichtung 9 zur Analyse der Zusammensetzung der aus dem Aggregat 1 entweichenden Abgase. Insbesondere werden hierbei zu einem beliebigen Mess-Zeitpunkt ($t_{mess}$) die Mengen der kohlenstoffhaltigen Anteile im Abgas und hieraus der Istwert ($v_{Cist}$) des Kohlenstoffstroms $\frac{d[C]}{dt}$ ermittelt.

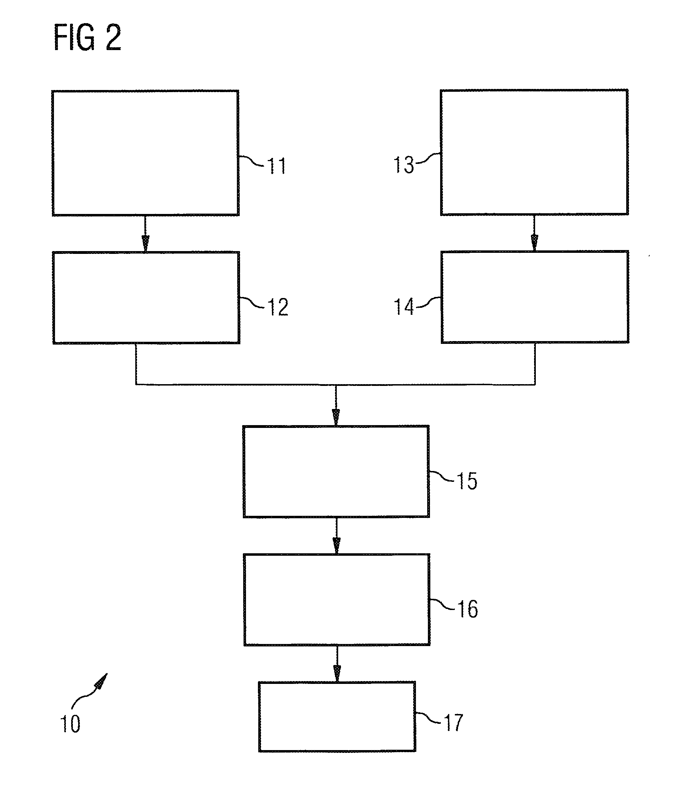

In FIG 2 ist das Ablaufdiagramm 10 des vorgestellten Verfahrens dargestellt. In einem Verfahrensschritt 11 wird beispielsweise aus der zu einem ersten Zeitpunkt $t_1$ der Schmelze zugeführten Menge an Sauerstoff und der zu diesem Zeitpunkt in der Schmelze enthaltenen Kohlenstoffs eine erste Kohlenstoffbilanz der Schmelze berechnet. Aus dieser Kohlenstoffbilanz wird in einem Verfahrensschritt 12 ein Sollwert $v_{Csoll}$ des aus der Schmelze entweichenden Kohlenstoffstroms $\frac{d[C]}{dt}$ berechnet. Hierbei werden sonstige Vorgänge, wie z.B. Eisen- und Siliciumoxidation u.a. berücksichtigt. Der Sollwert $V_{Csoll}$ kann zum Beispiel in Kilogramm je Zeiteinheit erfasst werden. Parallel zur Ermittlung des Sollwerts $v_{Csoll}$ wird in einem Verfahrensschritt 13 die mit der Messvorrichtung 9 ermittelte Zusammensetzung der aus dem Aggregat 1 zu einem Mess-Zeitpunkt $t_{mess}$ entweichenden Abgase analysiert und im Verfahrensschritt 14 der Istwert $v_{Cist}$ des aus der Schmelze entweichenden Kohlenstoffstroms $\frac{d[C]}{dt}$ aus der Analyse berechnet. Der Mess-Zeitpunkt $t_{mess}$ ist günstig gewählt, wenn er nach Verstreichen

- der Zeit-Differenz $\Delta t_{5,8}$ vom Entstehen des Kohlenmonoxids in der Schmelze 3 bis zum Aufsteigen der entstandenen kohlenstoffhaltigen Gase bis zur Messvorrichtung 9 im Abgasauslass 8 und
- der Zeitspanne $\Delta t_8$ zur Erfassung und Analyse der Zusammensetzung des Abgases mit Hilfe der Messvorrichtung 9 auf den ersten Zeitpunkt $t_1$ folgt.

Im Verfahrensschritt 15 werden Istwert $v_{Cist}$ und Sollwert $v_{Csoll}$ unter Berücksichtigung der zwischen dem ersten Zeitpunkt $t_1$ und dem Mess-Zeitpunkt $t_{mess}$ verstrichenen Zeitspanne $\Delta t_{5,8} + \Delta t_8$ verglichen. Ist der Istwert $v_{Cist}$ kleiner als der Sollwert $v_{Csoll}$, so deutet dies auf eine Ansammlung von Kohlenmonoxid in der Schmelze hin. In einem Verfahrensschritt 16 wird die Abweichung zwischen Istwert $v_{Cist}$ und Sollwert $v_{Csoll}$ ausgewertet. Ggf. können auch ein Istwert $m_{Cist}$ und ein Sollwert $m_{Csoll}$ der seit dem Beginn der Sauerstoffzufuhr zum Zeitpunkt $t_0$ entwichenen Kohlenstoffmenge ($C_{ges}$) ermittelt werden. Übersteigt die Abweichung zwischen Istwert $v_{Cist}$ und Sollwert $v_{Csoll}$ einen Schwellenwert, so werden in einem Verfahrensschritt 17 Gegenmaßnahmen eingeleitet. Die für den Ablauf der Verfahrensschritte 11 bis 17 benötigte Zeitspanne $\Delta t_{8,4}$ ist die Reaktionszeit, welche zur Einleitung von Gegenmaßnahmen erforderlich ist, welche die Einstellung der Menge der Sauerstoffzufuhr oder zusätzlichen Kohlenstoffs zur Schmelze 3 über die Einblasrohre 6 umfassen.

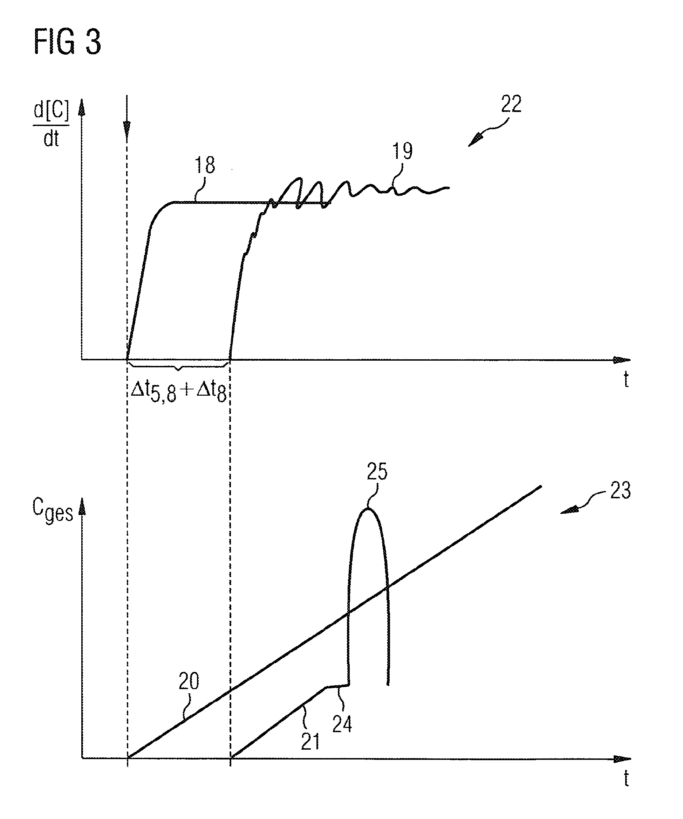

Anhand der Kennlinien 18 bis 21 der Graphen 22 und 23 in FIG 3 ist das Funktionsprinzip des Verfahrens zu erkennen. Im Graphen 22 sind über der Zeit t in Kennlinie 18 der Sollwert $v_{Cist}$ und in Kennlinie 19 der Istwert $v_{Csoll}$ der Kohlenstoffströme dargestellt. Ab dem Start-Zeitpunkt to der Zufuhr von Sauerstoff in die Schmelze 3 kann der Sollwert $v_{Csoll}$ berechnet werden. Bis aus Messwerten der Messvorrichtung 9 im Abgasauslass 8 die Menge des im entweichenden Abgas enthaltenen Kohlenstoffs ermittelt wird, vergeht die Zeitspanne $\Delta t_{5,8} + \Delta t_8$. Die Kennlinie 18 verdeutlicht das gewünschte stete Entweichen von Kohlenstoff bei zu erwartendem, näherungsweise konstantem oder schwach abnehmendem Sollwert $v_{Csoll}$ des Kohlenstoffstroms. Idealerweise soll der Istwert $v_{Cist}$ mit einer Verzögerung von $\Delta t_{5,8} + \Delta t_8$ dem Verlauf des Sollwerts folgen. Tatsächlich wird der Kohlenstoff nicht so gleichmäßig aus der Schmelze entweichen. Dies führt zu einer Abweichung der Kennlinie 19 für den Istwert $v_{Cist}$ gegenüber der Kennlinie 18, wobei eine Schwankung um den Verlauf der Kennlinie 18 innerhalb von Schwellwerten tolerierbar ist. Wird der Kohlenstoffstrom über der Zeit aufintegriert, so können daraus Istwert $m_{Cist}$ und Sollwert $m_{Csoll}$ für die seit dem Zeitpunkt $t_0$ aus der Schmelze entwichene Kohlenstoffmenge $C_{ges}$ angegeben werden. Die Kennlinie 20 zeigt den Verlauf des zur Kennlinie 18 korrespondierenden Sollwerts $m_{Csoll}$ und die Kennlinie 21 des Istwerts $m_{Cist}$ korrespondiert zur Kennlinie 19. Ab einem Zeitpunkt $t_2$ ist eine Abflachung 24 der Kennlinie 21 des Istwerts $m_{Cist}$ der Kohlenstoffmenge $C_{ges}$ zu erkennen. Dies deutet darauf hin, dass Kohlenmonoxid in der Schmelze angesammelt wird. Wird nicht geregelt, so kann zu einem späteren, unvorhersehbaren Zeitpunkt $t_3$ die Ansammlung in einer großen Gasblase schlagartig aufsteigen, was in der Kennlinie 21 durch die Überhöhung 25 dargestellt ist. Das erfindungsgemäße Verfahren ermöglicht die Erkennung einer solchen Abflachung 24 der Kennlinie 21 anhand der Auswertung von Istwert $v_{Cist}$ und Sollwert $v_{Csoll}$ des Kohlenstoffstroms und dient zur Einleitung geeigneter Gegenmaßnahmen zur Verhinderung von Boiling-Effekten.

**Patentansprüche**

1. Verfahren zur Regelung des CO-Austrags bei der Stahlerzeugung, bei dem einer Schmelze (3) zur Entfernung von enthaltenem Kohlenstoff (C) Sauerstoff ($O_2$) zugeführt, der Istwert ($m_{Cist}$) des aus der Schmelze entweichenden Kohlenstoffstroms ermittelt, der sich aus der zugeführten Sauerstoffmenge ($m_o$) und dem Kohlenstoffgehalt der Schmelze unter Berücksichtigung etwaiger sonstiger Reaktionen ergebende Sollwert ($m_{Csoll}$) des entweichenden Kohlenstoffstroms berechnet wird und Soll- und Istwert miteinander verglichen werden, **dadurch gekennzeichnet dass**, im Falle eines Zurückbleibens des Istwertes gegenüber dem Sollwert als Maßnahme zur Verhinderung von Boiling-Effekten der Schmelze Kohlenstoff zugeführt wird.

2. Verfahren nach Anspruch 1, bei dem als Maßnahme die Sauerstoffzufuhr zur Schmelze gesteuert wird.

3. Verfahren nach Anspruch 2, bei dem die Sauerstoffzufuhr reduziert wird.

**Claims**

1. Method of regulating the output of CO in steel production, in which oxygen ($O_2$) is supplied to a melt (3) to remove carbon (C) present, the actual value ($m_{Cist}$) of the carbon stream given off from the melt is determined and the expected value ($m_{Csoll}$) of the carbon stream released, which is determined by the amount of oxygen ($m_o$) fed in and the carbon content of the melt taking into account any other reactions, is calculated and actual and expected values are compared with one another, **characterized in that** in the case of the actual value being below the expected value carbon is supplied to the melt as measure for preventing boiling effects.

2. Method according to Claim 1, wherein the supply of oxygen to the melt is controlled as measure.

3. Method according to Claim 2, wherein the supply of oxygen is reduced.

**Revendications**

1. Procédé de régulation de l'émission de CO dans la production d'acier, dans lequel on envoie de l'oxygène ( O2 ) à une masse ( 3 ) fondue pour l'élimination du carbone ( C ) qui y est contenu, on détermine la valeur ( $m_{Cist}$ ) réelle du courant de carbone se dégageant de la masse fondue, on calcule la valeur ( $m_{Csoll}$ ) de consigne du courant de carbone se dégageant à partir de la quantité ( $m_o$ ) d'oxygène apportée et de la teneur en carbone de la masse fondue, tout en tenant compte d'autres réactions éventuelles, et on compare entre elles la valeur de consigne et la valeur réelle, **caractérisé en ce que**, si la valeur réelle reste en arrière par rapport à la valeur de consigne, on envoie du carbone à la masse fondue comme mesure pour empêcher des effets de boiling.

2. Procédé suivant la revendication 1, dans lequel on règle comme mesure l'envoi d'oxygène à la masse fondue.

3. Procédé suivant la revendication 2, dans lequel on réduit l'envoi d'oxygène.

# FIG 1

FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 5222429 B